Europäisches Patentamt

European Patent Office

Office européen des brevets

(19)

(11) Publication number: **0 395 331**
**A1**

## EUROPEAN PATENT APPLICATION

(21) Application number: 90304321.4

(22) Date of filing: 23.04.90

(51) Int. Cl.⁵: **B01D 39/16, B01D 35/06, B03C 3/28**

(30) Priority: 26.04.89 JP 106591/89

(43) Date of publication of application:
31.10.90 Bulletin 90/44

(84) Designated Contracting States:
**DE FR GB IT SE**

(71) Applicant: JAPAN GORE-TEX, INC.
42-5, 1-chome Akazutsumi
Setagaya-ku Tokyo 156(JP)

(72) Inventor: Ichiyasu, Satoshi
17, Noboritoshinmachi, Tama-Ku
Kawasaki-Shi, Kanagawa-Ken 214(JP)

(74) Representative: McCallum, William Potter et al
Cruikshank & Fairweather 19 Royal
Exchange Square
Glasgow G1 3AE Scotland(GB)

(54) Electret filter material.

(57) A composite filter material for filtering gases comprising at least one layer of porous polytetrafluoroethylene and at least one layer of fibrous electret material for use to clean the air in facilities such as clean rooms for manufacturing semiconductors, electronic equipment, or medical products.

EP 0 395 331 A1

## ELECTRET FILTER MATERIAL

This invention relates to filter materials for cleaning the internal atmospheres of facilities used to manufacture semiconductors, precision electronic equipment, medical products, or biochemical products, or the internal atmospheres of facilities or precision instruments used in experimentation or medical treatments involving such products.

With the rapid technological progress that has occurred in recent years, there has been an increased demand for a high degree of cleanliness in the internal atmospheres of facilities used to manufacture semiconductors, precision electronic equipment, medical products, and biochemical products and in the internal atmospheres of facilities and precision instruments used in experimentation, measurements, and medical treatments involving such products. In such cases, the air in the internal atmospheres of said manufacturing facilities or instruments is circulated and filtered through a filter. Accordingly, various filter materials for this purpose have been proposed and used in practical applications.

Specifically, materials with a continuously porous structure consisting of synthetic resins or non-woven fabrics or other layered aggregates of microfibers have been used for such filtration purposes.

Recently, electret filters have been disclosed which are formed by subjecting the individual fibers making up the filter to an electret-forming treatment. In such filters, a superior particle capturing force is obtained through the use of coulomb and/or dipole charges. Such filters are advantageous in that the same capturing capacity can be achieved with less resistance to flow through the filter. Further, these filter materials show little damage or secondary contamination caused by chemical factors.

However, in the conventional filter materials described above, the resistance to flow through the filter generally increases when an attempt is made to increase the capture rate of the filter. Specifically, in order to increase the capture rate, it is necessary to use a microporous filter structure. However, if the filter structure is made microporous, the resistance to flow of air through the filter is unavoidably increased. This is especially conspicuous in cases where the capture rate exceeds 98%. In such cases, the resistance to flow shows an abrupt increase. Accordingly, if an attempt is made to increase the degree of cleaning by increasing the capture rate in this way, the resulting operation necessarily becomes very expensive.

Further, the above filters, which generally consist of fibrous materials shaped into layer form, show some generation of dust themselves. Accordingly, even if contaminants are successfully captured, the painstakingly cleaned atmosphere is contaminated by this auto-generation of dust by the filter. Also, chemicals are usually used in the production of the various types of products described above. Accordingly, if gases or mists generated by or from these chemicals diffuse into the atmosphere, the filter material may be damaged or react with the chemical resulting in secondary contamination from the chemical reaction. Electret filter materials, developed as filter materials which show little damage or secondary contamination caused by such chemical factors, do not afford capture rates comparable to those of conventional glass fiber filters. Unlike ordinary filter materials, electret filter materials also do not show a high efficiency in capturing dust particles whose diameters exceed 0.1 micron. Moreover, since the principle of the capturing action in electret filter materials is eletrostatic, the capture mechanism no longer operates when the filter material becomes wet, which results in an extremely severe drop in efficiency.

According to the present invention there is provided a composite filter material comprising:

(a) at least one layer of porous fibrillated synthetic polymer resin; and

(b) at least one layer of fibrous electret material.

According to a further aspect of the present invention there is provided a filter assembly comprising a frame in which is mounted a filter material as set out in the preceding paragraph.

The invention provides a filter material which suffers from little pressure loss and which has a high capture efficiency so that an ultra-high degree of cleanliness of the filtered medium can be obtained. The invention also provides a filter material which shows no self-generation of dust or secondary contamination, and shows no change in performance when wet and which makes it possible to perform low-cost cleaning with high efficiency.

The filter material of the invention combines a porous fibrillated synthetic resin film with an electret filter material, formed into a layer by applying an electric charge to a fibrous resin material. The porous film material is preferably obtained by stretching a polytetrafluoroethylene (PTFE) film material.

The porous film material increases the capture rate and prevents any invasion of the electret filter material by moisture or chemical components, thus preventing any drop in performance that would be caused by such an invasion.

Since the resistance to flow is lowered by the electret filter material, a filter material with a high particle capture rate and a low resistance to flow is obtained by combining said electret filter material with the porous PTFE film material to form a composite material.

The porous PTFE film material shows no generation of dust itself and dust generated by the electret filter material can be captured by using such a porous PTFE film material on the downstream side of the electret filter material.

Embodiments of the present invention will now be described, by way of example, with reference to the accompanying drawings in which:-

Fig. 1 shows a cross-sectional view of a composite filter material of the invention;

Fig. 2 shows in cross-section a layered composite filter material of the invention having an additional layer of fibrous material;

Fig. 3 shows in cross-section a layer of electret material enveloped in porous PTFE film material;

Fig. 4 shows a sectioned filter assembly in which a composite filter material is pleated and fastened into a filter frame.

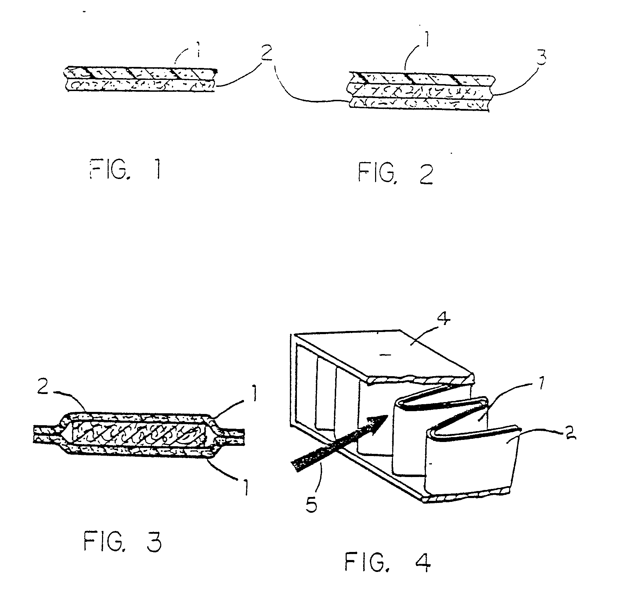

As shown in Fig. 1, the basic embodiment of the present invention is a porous film material 1, preferably obtained by subjecting PTFE film to a drawing treatment so that the film is fibrillated, laid over an electret filter material 2, preferably formed by applying a high voltage to a fibrous resin material such as polypropylene, so that a semi-permanent electric charge is imparted to the fibrous resin material, and then forming the fibrous resin material into a non-woven fabric. These two materials are then laminated by means of heat or an adhesive agent. The preferred porous PTFE material is prepared by drawing or stretching a PTFE film as described in U S Patents Nos. 3953566, 4187390, 3962153 and 4096227, which are hereby incorporated by reference.

In the embodiment illustrated in Fig. 2, porous film material 1 and electret filter material 2 are the same as the materials described above in relation to Fig. 1. In this embodiment, however, an additional non-woven fabric 3 consisting of polypropylene resin fibers or resin or polyester fiber non-woven fabric is used, and filter material 2 is laminated with a material formed by prior lamination of the non-woven fabric 3 with porous film material 1.

In Fig. 3, filter material 2 is enveloped in porous film material 1. In this case, the film material used may also consist of a film material formed by lamination of a non-woven fabric 3 with PTFE film material 1 as in the embodiment illustrated in Fig. 2.

Fig. 4 illustrates a filter assembly in which a composite filter material obtained by one of the procedures illustrated by reference to Figs. 1 to 3 is worked into a pleated form and fastened to frame 4. The direction of air flow through the assembly is shown by arrow 5.

Methods which can be used to impart an electric charge to electret filter material 2 typically include (a) a method in which direct current voltage is applied to the material whilst the material is heated to a temperature near the softening point or (b) a method in which a coulomb discharge is performed or in which a high voltage close to the insulation breakdown voltage is applied to the material at room temperature. Alternatively, it would also be possible to use (c) a method in which the material is irradiated with a reduced-energy electron beam in a vacuum, (d) a method in which strong magnetostatic lines are caused to act on the material, with the material heated to a temperature near the softening point, or (e) a method in which the material is subjected to pressure deformation, thus creating charge separation and trapping so that a space charge is formed. A heat-embossing method or needle-punching method can be used to form the material into a non-woven fabric.

As mentioned above, a drawn porous PTFE resin material is desirable for use as porous film material 1. Such a material is formed by subjecting a PTFE resin film to uniaxial or multiaxial drawing so that said film is fibrillated, thus producing a high-strength structure in which micro-fibrils are formed in a unidirectional or multidirectional spider-web arrangement of fibrils between micro-nodes. The pore diameter of this material is approximately 1.0 to 15 microns, and the porosity is approximately 80 to 95%. The material is water-repellent, and the structure itself acts as a filter and shows a desirable capturing effect. The efficiency of particle capture is generally 85% or greater.

By using porous film material 1 and electret filter material 2 in composite arrangements as illustrated in Figs. 1 to 4, it is possible to obtain a filter material which has a high particle capturing efficiency and a low resistance to flow. The particle capturing efficiency of porous PTFE film material alone is generally high, approximately 90 to 99.8%. However, the resistance to flow is approximately 2.5 to 20 mmAq in terms of rated pressure loss. Even in the above range, the rated pressure loss increases with an increase in the particle capturing efficiency as in general filter materials. In contrast, the particle capturing efficiency of electret filter material 2 ranges broadly from a few percent to 95%, while the rated resistance to flow of electret filter material 2 is comparatively low, at 0.5 to several mmAq. By combining these two materials, it is possible to obtain a filter material which has a particle capturing efficiency of 99.5% or greater and a resistance to flow of only a few mmAq.

3

The filter material of the present invention can be widely used, not only for the purpose of obtaining a high degree of cleanliness in clean rooms used in various types of manufacturing facilities, such as semiconductor manufacture or facilities used for experimentation or medical treatment, but also as an internal circulation filter material or respiration filter material in precision electronic devices, such as hard disc drives. Furthermore, by positioning a sheet or porous film material 1 on the downstream side of the air current passing through the filter, it is also possible to capture any dust generated from electret filter material 2 by means of porous film material 1. Moreover, by positioning a sheet of porous film material 1 (which is also water-repellent) on the upstream side, it is possible to prevent the passage of any moisture which might invade electret filter material 2. Naturally, both of these functions can be simultaneously obtained by installing sheets of porous film material 1 on both sides of electret filter material 2.

Sample films prepared as examples of drawn porous PTFE film 1 are shown in Table 1 below.

Sample materials prepared as examples of electret filter material 2 for use with film material 1 are shown in Table 2 below.

The porous film material 1 shows no generation of dust itself and no drop in efficiency when wet. On the other hand, electret filter material 2 generates dust itself and shows a drop in efficiency when wet. The characteristics of sample filter materials obtained by combining materials 1 and 2 are shown in Table 3 below.

Table 1

| Sample | Thickness (mm) | Pore Size (microns) | Porosity (%) | Amount of Air Passing Through (cc/cm$^2$·sec)* | Capturing Efficiency (%)** |
|---|---|---|---|---|---|
| 1 | 0.008 | 15 | 95 | 20.5 | 93.0 |
| 2 | 0.017 | 10 | 92 | 14.1 | 98.0 |
| 3 | 0.025 | 5 | 88 | 7.0 | 99.8 |

*The amount of air passing through was measured at 12.7 mmAq.
**The capturing efficiency was measured for particles 0.3 to 0.5 micron in diameter.

Table 2

| Sample | Fiber Type | Weight (g/m$^2$) | Thickness (mm) | Amount of Air Passing Through (cc/cm$^2$·sec)* | Capturing Efficiency (%)** |
|---|---|---|---|---|---|
| 4 | ultra-fine | 100 | 2.1 | 85.0 | 98.0 |
| 5 | standard | 200 | 3.3 | 74.0 | 99.0 |
| 6 | ultra-fine | 200 | 3.2 | 34.0 | 99.8 |

*The amount of air passing through was measured at 12.7 mmAq.
**The capturing efficiency was measured for particles 0.3 to 0.5 micron in diameter.

Table 3

| Combination | Amount of Air Passing Through (cc/cm$^2 \cdot$sec)* | Rated Pressure Loss (mmAq) [lit. "mmAg"] | Capturing Efficiency (%)** |
|---|---|---|---|
| 1 and 4 | 18.4 | 4.7 | 99.88 |
| 2 and 5 | 11.2 | 8.2 | 99.98 |
| 1 and 6 | 14.1 | 6.5 | 99.990 |
| 3 and 4 | 6.3 | 17.1 | 99.994 |
| 3 and 5 | 6.3 | 17.2 | 99.997 |
| 2 and 6 | 10.4 | 9.8 | 99.996 |
| 2 and 4 | 11.0 | 7.3 | 99.96 |

*The amount of air passing through was measured as 12.7 mmAq.
**The capturing efficiency was measured for particles 0.3 to 0.5 micron in diameter.

It is seen that high-performance filter materials with a low resistance to flow and a high capturing efficiency can be obtained by using appropriate combinations of the two filter materials described above.

In particular, combinations using samples 2 and 3 are optimal. Such a low resistance flow and high capturing efficiency cannot be obtained using the respective materials individually. Furthermore, the effect obtained here cannot be obtained in conventional filter materials. Specifically, it was confirmed that a high degree of cleaning can be obtained at a resistance to flow which is a fraction of the resistance to flow occurring in conventional filters. Furthermore, even though an electret filter material 2 is used, auto-generation of dust and decreased performance owing to the wetting are effectively prevented by the presence of porous PTFE film material so that a high-durability filter material is obtained.

The invention provides a filter material which has a high particle capturing efficiency and a low resistance to flow. Auto-generation of dusts and decreased performance due to wetting are prevented and the filter material of the present invention has superior characteristics which prevent any damage or secondary contamination that might be caused by gases or mists of chemical substances in the atmosphere. In addition, the present invention has the following features which contribute to high efficiency. As a result of the high capture rate, the target atmosphere can be cleaned to a prescribed degree of cleanliness in a short period of time and can be maintained at that degree of cleanliness, and as a result of the low resistance to flow, such a cleaning operation can be performed at a low cost.

## Claims

1. A composite filter material comprising:
    (a) at least one layer of porous fibrillated synthetic polymer resin; and
    (b) at least one layer of fibrous electret material.

2. A filter material as claimed in claim 1, wherein said porous fibrillated synthetic polymer resin comprises porous polytetrafluoroethylene.

3. A filter material as claimed in claim 1 or 2, wherein said fibrous electret material comprises polypropylene.

4. A filter material as claimed in any preceding claim, wherein said layer of porous fibrillated synthetic polymer resin surrounds completely said fibrous electret material.

5. A filter assembly comprising a frame in which is mounted a filter material as claimed in any preceding claim.

6. A filter assembly as claimed in claim 5, in which the layer of porous fibrillated synthetic polymer resin is located on the downstream side of the filter material.

7. A filter assembly as claimed in claim 5 or 6, in which the layer of porous fibrillated synthetic polymer resin is located on the upstream side of the filter material.

FIG. 1

FIG. 2

FIG. 3

FIG. 4

# DOCUMENTS CONSIDERED TO BE RELEVANT

EP 90304321.4

| Category | Citation of document with indication, where appropriate, of relevant passages | Relevant to claim | CLASSIFICATION OF THE APPLICATION (Int. Cl⁵) |
|---|---|---|---|
| A | US - A - 4 323 374 (SHINAGAWA) * Claims; column 4, lines 4-33 * | 1,3,5, 7 | B 01 D 39/16 B 01 D 35/06 B 03 C 3/28 |
| A | US - A - 4 456 648 (ADAMSE) * Totality * | 1,3 | |
| A | US - A - 4 178 157 (VAN TURNHOUT) * Claims; column 3, line 30 - column 4, line 5 * | 1,3 | |
| D,A | US - A - 4 096 227 (GORE) * Claims * | 1,2 | |

TECHNICAL FIELDS SEARCHED (Int Cl⁵)

B 01 D
B 03 C
A 62 B
B 29 D
D 04 H

The present search report has been drawn up for all claims

| Place of search | Date of completion of the search | Examiner |
|---|---|---|
| VIENNA | 26-07-1990 | BECKER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document. but published on, or after the filing date
D : document cited in the application
L : document cited for other reasons

& . member of the same patent family, corresponding document

EPO Form 1503 03 82